(19) Europäisches Patentamt / European Patent Office / Office européen des brevets

(11) **EP 4 550 899 B1**

(12) **EUROPEAN PATENT SPECIFICATION**

(45) Date of publication and mention of the grant of the patent:
**03.06.2026 Bulletin 2026/23**

(21) Application number: **24164357.6**

(22) Date of filing: **19.03.2024**

(51) International Patent Classification (IPC):
$H04W\ 52/14^{(2009.01)}$    $H04B\ 7/06^{(2006.01)}$
$H04W\ 52/16^{(2009.01)}$

(52) Cooperative Patent Classification (CPC):
**H04W 52/143; H04B 7/0626; H04W 52/16**

(54) **METHOD AND APPARATUS FOR POWER CONTROL OFFSET SCALING FOR COHERENT JOINT TRANSMISSION**

VERFAHREN UND VORRICHTUNG ZUR LEISTUNGSREGELUNGS-OFFSETSKALIERUNG FÜR KOHÄRENTE GEMEINSAME ÜBERTRAGUNG

PROCÉDÉ ET APPAREIL DE MISE À L'ÉCHELLE DE DÉCALAGE DE COMMANDE DE PUISSANCE POUR TRANSMISSION CONJOINTE COHÉRENTE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **01.11.2023 US 202363595211 P**

(43) Date of publication of application:
**07.05.2025 Bulletin 2025/19**

(73) Proprietor: **Nokia Technologies Oy**
**02610 Espoo (FI)**

(72) Inventors:
• **TOSATO, Filippo**
**Villebon sur Yvette (FR)**
• **ENESCU, Mihai**
**Espoo (FI)**

(74) Representative: **Cohausz & Florack**
**Patent- & Rechtsanwälte**
**Partnerschaftsgesellschaft mbB**
**Bleichstraße 14**
**40211 Düsseldorf (DE)**

(56) References cited:
• HUAWEI ET AL: "CSI enhancement for coherent JT and mobility", vol. RAN WG1, no. Incheon, Korea; 20230522 - 20230526, 15 May 2023 (2023-05-15), XP052385171, Retrieved from the Internet <URL:https://ftp.3gpp.org/tsg_ran/WG1_RL1/TSGR1_113/Docs/R1-2304638.zip R1-2304638.docx> [retrieved on 20230515]
• AT&T: "Views on CSI Enhancements for CJT", vol. RAN WG1, no. Incheon, Korea; 20230522 - 20230526, 15 May 2023 (2023-05-15), XP052385405, Retrieved from the Internet <URL:https://ftp.3gpp.org/tsg_ran/WG1_RL1/TSGR1_113/Docs/R1-2304939.zip R1-2304939-Views on CSI Enhancements for CJT.docx> [retrieved on 20230515]

**Description**

<u>TECHNICAL FIELD</u>

The present application relates generally to channel state information (CSI) determination and reporting for coherent joint transmission in wireless networks.

<u>BACKGROUND</u>

In 3GPP New Radio (NR) Release 18, a new feature, called Type-II-CJT, was specified that extends support of Type-II codebooks to multi-transmission point (multi-TRP) channel state information (CSI) reporting for coherent joint transmission (CJT) with up to 4 distributed remote radio heads (RRH) or transmission points (TRPs). This CJT differs from earlier defined non-coherent joint transmission (NCJT) in that it assumes that each multiple input, multiple output (MIMO) layer can be transmitted from antenna ports of multiple TRPs, whereas in NCJT, each MIMO layer can only be transmitted from a single TRP.

Both NCJT and CJT assume full overlap of MIMO layers in time and frequency resources, and they both require accurate time synchronization between TRPs to be within the cyclic prefix of a symbol. Additionally, CJT also assumes phase synchronisation between TRPs such that precoding of a MIMO layer can be applied across antenna ports of multiple TRPs.

From user equipment (UE) perspective, the layer reception is transparent with respect to the transmitting TRP with the distinction that in CSI feedback stage, for NCJT the precoding weights associated to a layer are applicable to a single TRP out of the configured ones for CSI feedback, while for CJT, the precoding weights are associated with all the selected TRPs.

In Type-II-CJT a UE is configured to measure $K_s = N_{TRP}$ CSI-RS resources, where $N_{TRP}$ is the maximum number of configurable TRPs/TRP groups and it selects $N \le N_{TRP}$ CSI-RS resources for CSI reporting. Hence, a CJT CSI calculation at the UE, which typically comprises CQI (channel quality indicator), PMI (precoder matric indicator) and RI (rank indicator), is based on the assumption that v MIMO layers, where $\upsilon$ is the rank indicated by the RI, are transmitted from the antenna ports of the *N* selected CSI-RS resources. Several other assumptions are specified in Clause 5.2.2.5 of 3GPP TS 38.214 for CQI/PMI/RI calculations applicable to the slot associated with the CQI calculation, i.e. the CSI reference resource, including the assumptions on the ratio of physical downlink shared channel (PDSCH) energy per resource element (EPRE) to CSI-RS EPRE, henceforth also termed power control ratio or Pc ratio. This Pc ratio assumption is used by a UE to determine the transmit power of the PDSCH signals from the measured CSI-RS power, such that the CQI of the transmission hypothesis associated with the CSI calculation can be estimated.

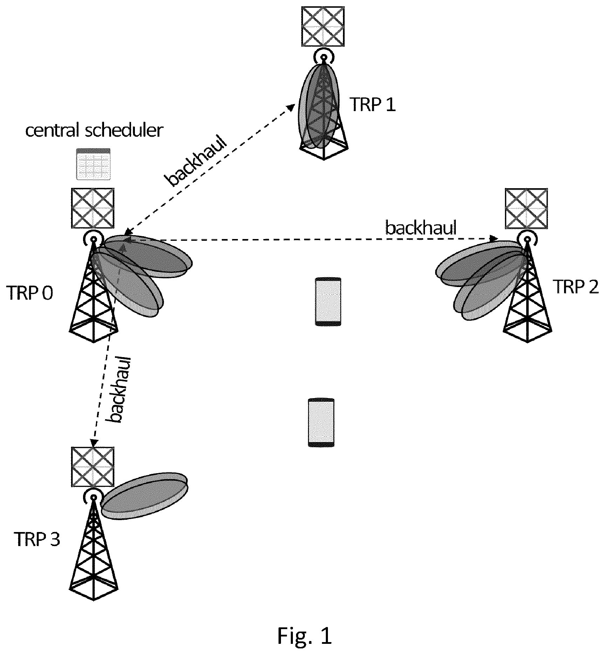

Figure 1 shows an example of a multi-TRP system formed by a maximum of $N_{TRP}=4$ TRPs (or TRP groups) connected via a backhaul link and transmitting coherently to one or more co-scheduled UEs. In this example, it is assumed that each remote radio head (RRH)/TRP has the same array geometry, $N_1 \times N_2$, with $N_1$ antenna ports in azimuth and $N_2$ in elevation, for each of the two polarisations, and hence $2N_1 \times N_2$ antenna ports in total per TRP. In the example, each TRP is equipped with a $2 \times 2$ dual-polarised array, such that the total number of transmit antenna ports across the TRPs is $N_{TRP} \times 2N_1 \times N_2 = 32$.

At present, an agreement has been reached that a UE can assume that the Pc ratio follows a commonly configured powerControlOffset value for all of N selected CSI-RS resources. It was also agreed that in a CJT transmission, the combined precoder across the N selected CSI-RS resources is normalised for each layer and the PDSCH across all the N selected resources is used in CSI calculation. However, no restriction on the configuration of the Pc ratio for each of the $N_{TRP}$ CSI-RS resources is assumed.

---

*Agreement*

*For the Rel-18 Type-II codebook refinement for CJT mTRP, on PDSCH EPRE assumption for CQI calculation, the UE can assume that the PDSCH EPRE follows a commonly configured powerControlOffset value for all the N selected CSI-RS resources*

   *- Note: For CSI calculation, the combined precoder across N selected (out of the configured $N_{TRP}$) CSI-RS resources is normalized for each layer and the transmitted PDSCH across N selected (out of the configured $N_{TRP}$) CSI-RS resources will be used in CSI calculation (up to the editor)*

*Note: This doesn't restrict how NW configures powerControlOffset for each CSI-RS resource in general. It pertains to UE assumption on CQI calculation for the CSI-RS resources used in the same CSI reporting setting for Rel-18 Type-II CJT*

---

This agreement has been adopted in 3GPP TS38.214 v.18.0.0 such that:

- a UE can assume that the PDSCH signals for $\upsilon$ layers transmitted on the $P$ antenna ports of CSI-RS resource $\sigma_j$ would have the same ratio of EPRE to CSI-RS EPRE for all $j = 1, ... , N$, equal to the *powerControlOffset* of the respective CSI-RS resource.

An alternative interpretation of this agreement, proposed but not adopted, was that a UE could assume that the PDSCH signals for $\upsilon$ layers transmitted on the NP antenna ports would have the same ratio of EPRE to CSI-RS EPRE of CSI-RS resource $\sigma_j$, transmitted on the corresponding P antenna ports for all j=1,...,N, equal to the powerControlOffset of the respective CSI-RS resource.

Another alternative interpretation of this agreement, proposed but not adopted, was a UE can assume that the PDSCH signals for $\upsilon$ layers would have the same ratio of EPRE to CSI-RS EPRE for all CSI-RS resources $\sigma_j$, with j=1,...,N, equal to the powerControlOffset of the respective CSI-RS resource.

In all three proposed interpretations, the understanding of the definition of the PDSCH over CSI-RS EPRE ratio is the same in that it is the ratio between the energy of all the PDSCH ports (i.e., layers), $\upsilon$, multiplexed in an RE and the energy of all the CSI-RS ports from a given CSI-RS resource multiplexed in an RE. In other words, one should consider how many PDSCH ports mapped in one RE are transmitted on the P CSI-RS ports of resource $\sigma_j$ : all $\upsilon$ ports. Hence the energy of all those $\upsilon$ ports multiplexed in an RE are included in the PDSCH EPRE calculation. Then, one should consider how many ports of the P ports of CSI-RS resource $\sigma_j$ are multiplexed in one RE and include these in the CSI-RS EPRE calculation.

In summary, the Pc ratio for a CSI-RS resource configured for CJT CSI reporting is agreed to be calculated as follows:

1. PDSCH energy is summed across all layers transmitted on the ports of a CSI-RS resource. The energy of a layer is not split in the portions of energy transmitted by each TRP.

2. CSI-RS energy is summed across all ports of a CSI-RS resource mapped to the same RE.

3GPP TSG-RAN WG1 Meeting #113 documents R1-2304638, CSI enhancement for coherent JP and mobility' and R1-2304939, 'Views on CSI Enhancement for CJT' both discuss CSI enhancement for CJT.

## SUMMARY

Various aspects of examples of the invention are set out in the claims. The scope of protection sought for various embodiments is set out in the independent claims.

## BRIEF DESCRIPTION OF THE DRAWINGS

For a more complete understanding of example embodiments of the present invention, reference is now made to the following descriptions taken in connection with the accompanying drawings in which:

FIGURE 1 illustrates an example of a multi-TRP system;
FIGURE 2 illustrates various embodiments of the present invention; and
FIGURE 3 illustrates a block diagram illustrating an example wireless apparatus in accordance with embodiments of the invention.

## DETAILED DESCRIPTON

The agreement as previously described, does not restrict the network configuration. If different TRPs experience different path loss, for example, the Pc ratios of the corresponding CSI-RS resources may be configured with different values because the transmitted EPRE of one CSI-RS resource may be different than that of another CSI-RS resource. A UE that does not support PMI calculation with different ratios would hence have to select N CSI-RS resources configured with the same ratio.

Another present problem is that a gNB does not know the number $N \leq N_{TRP}$ of selected TRPs by the UE at the time of configuring the Pc ratios for the $N_{TRP}$ CSI-RS resources for channel measurement. Say $E_{PDSCH}$ is the maximum EPRE that a TRP is allowed to transmit at, and $E_{CSI-RS,\sigma_j}$ the EPRE of the CSI-RS resource $\sigma_j$, assuming that a gNB operates each TRP at maximum power level, the Pc ratio for resource $\sigma_j$ depends on the number of configured TRPs, $N_{TRP}$, i.e.

Pc ratio of CSI-RS resource $\sigma_j = \dfrac{N_{TRP} \cdot E_{PDSCH}}{E_{CSI-RS,\sigma_j}}$

However, if a UE selects $N \leq N_{TRP}$ TRPs for CSI reporting, the assumed Pc ratio should assume CJT transmission from N instead of $N_{TRP}$ TRPs, i.e. it should assume:

Pc ratio of CSI-RS resource $\quad \sigma_j = \dfrac{N \cdot E_{PDSCH}}{E_{CSI-RS,\sigma_j}}$

Otherwise the reported CQI would be overestimated. For example, the CQI reported for N=2 TRPs would be 3dB higher for a configuration with $N_{TRP}=4$ compared to a configuration with $N_{TRP}=2$.

The aforementioned adopted agreement should hence be modified such that a UE can assume that the PDSCH signals for $\upsilon$ layers would have the same ratio of EPRE to CSI-RS EPRE for all CSI-RS resource $\sigma_j$, with j=1,...,N, equal to $N/N_{TRP}$ times the powerControlOffset of the respective CSI-RS resource.

The avantages of the preposed scaling on the CQI calculation for CJT CSI reporting is described infra. Although the detailed calculation of a CQI is up to UE implementation and no specific detailed calculation is necessary for implementing embodiments the present invention, certain UE assumptions on the mapping of PDSCH layers to CSI-RS ports and PDSCH transmission power are specified to avoid incorrect CQI determination.

In the present CJT CSI reporting, a UE can support up to rank-4 PDSCH transmission, hence a single PDSCH codeword and a single CQI is calculated per codeword. This CQI can be reported per subband or wideband across the configured reporting band. For a CJT transmission, as mentioned above, a UE assumes that the signal of each PDSCH port (i.e., layer) is transmitted on all the CSI-RS ports of the N selected CSI-RS resources with P ports each and that the power of the PMI for each layer is normalised across these N×P ports independently of the other layers.

A UE can derive the total transmit power of the PDSCH across the $\upsilon$ layers on one subcarrier from the Pc offset definition for CSI-RS resource $\sigma_j$, $P_{c,\sigma_j}$:

$$P_{c,\sigma_j} = \frac{\sum_{p=0}^{v-1}\left|x^{(p)}\right|^2}{N_{CDM} \cdot \beta_{CSI-RS,\sigma_j}^2}$$

where $x^{(p)}$ is the PDSCH signal of layer p, $N_{CDM}$ is the number of CDM groups The factor $\beta_{CSI-RS,\sigma_j}$ is the scaling factor applied to mapping of CSI-RS resource $\sigma_j$ to REs, as defined in Clause 7.4.1.5.3 of 3GPP TS 38.211. The PDSCH transmission is specified in Clause 5.2.2.5.1b of TS 38.214 as:

- a UE should assume PDSCH signals on antenna ports in the set [1000, ...,1000 + $\upsilon$ - 1] for $\upsilon$ layers would result in signals equivalent to corresponding symbols transmitted on antenna ports [3000, ... ,3000 + $P$ - 1] of each of the $N$ selected CSI-RS resources, as given by

$$\begin{matrix} y_{\sigma_1}^{(3000)}(i) \\ \vdots \\ y_{\sigma_1}^{(3000+P-1)}(i) \\ y_{\sigma_2}^{(3000)}(i) \\ \vdots \\ y_{\sigma_2}^{(3000+P-1)}(i) \\ \vdots \\ y_{\sigma_N}^{(3000)}(i) \\ \vdots \\ y_{\sigma_N}^{(3000+P-1)}(i) \end{matrix} = W(i) \begin{matrix} x^{(0)}(i) \\ \vdots \\ x^{(v-1)}(i) \end{matrix}$$

where $W(i)$ is the precoding matrix corresponding to the procedure described in Clause 5.2.2.2.8 and 5.2.2.2.9 for *codebookType* set to 'typeII-CJT-r18' and ' typeII-CJT-PortSelection-r18', respectively, and $\{\sigma_1, ... , \sigma_N\}$ are the indices of the $N$ selected CSI-RS resources in increasing order, such that $1 \leq \sigma_1 < ... < \sigma_N \leq N_{TRP}$. A UE should assume that the signals $y_{\sigma_j}$, j = 1, ... , $N$, fully overlap in time and frequency.

As it is presently proposed to change the notation in the above cited standard specification to denote N as $N_0$, these two notations are here used interchangeably.

The total PDSCH transmitted power depends on the number of transmitting TRPs, under the assumption of a maximum allowed transmit power per antenna. The effect of UE selection of N out of $N_{TRP}$ CSI-RS resources for CJT transmission is that of muting a subset of configured TRPs and their respective antennas, thereby reducing the transmit power of the PDSCH transmission hypothesis. In calculating this power reduction factor, the effect of power backoff, which is needed to ensure that the maximum per antenna power constraint is satisfied if the precoding weights applied to the antenna ports have different amplitudes, is not considered. This power backoff adjustement is typically applied at the gNB depending on actual PDSCH precoding weights, which may be different from reported PMI weights. Therefore, under the assumption of equal amplitude PDSCH precoding weights, or on average over all possible precoders, the total transmitted PDSCH power for a CJT transmission scales linearly with the number of active TRPs, i.e., the total transmitted PDSCH power assuming N transmitting TRPs is N times the total transmitted PDSCH power assuming 1 transmitting TRP, and $N/N_{TRP}$ times the total transmitted PDSCH power assuming $N_{TRP}$ transmitting TRPs, for $1 \leq N \leq N_{TRP}$.

Because the gNB, in general, does not know in advance the number N of UE selected CSI-RS resources/TRPs, the configured Pc ratio for CSI-RS resource $\sigma_j$ can be expressed as

$$P_{c,\sigma_j} = \frac{\left(\sum_{p=0}^{\nu-1}|x^{(p)}|^2\right)_{N_{TRP} \text{ transmitting TRPs}}}{N_{CDM} \cdot \beta_{CSI-RS,\sigma_j}^2}.$$

A UE can obtain the total transmitted PDSCH power from the configured Pc ratio of the j-th selected CSI-RS resource $\sigma_j$, j=1,...,N, as follows:

$$\left(\sum_{p=0}^{\nu-1}|x^{(p)}|^2\right)_{N \text{ transmitting TRPs}} = \frac{N}{N_{TRP}}\left(\sum_{p=0}^{\nu-1}|x^{(p)}|^2\right)_{N_{TRP} \text{ transmitting TRPs}}$$

$$= \frac{N}{N_{TRP}} P_{c,\sigma_j} N_{CDM} \cdot \beta_{CSI-RS,\sigma_j}^2$$

which is equivalent to assuming a Pc ratio that is a fraction $N/N_{TRP}$ of the configured Pc ratio for that resource.

Applying a scaling factor $N/N_{TRP}$ ensures that a UE does not overestimate the transmitted power when calculating the CQI for a CJT transmission hypothesis with $N<N_{TRP}$ active TRPs, which could lead to a bias towards selecting fewer TRPs for transmission: if the assumed total transmitted power is independent of the number of active TRPs, whereas cross-layer interference increases with the number of active TRPs because there are more interfering transmitting antennas, the estimated CQI tends to increase as the number of active TRPs decreases.

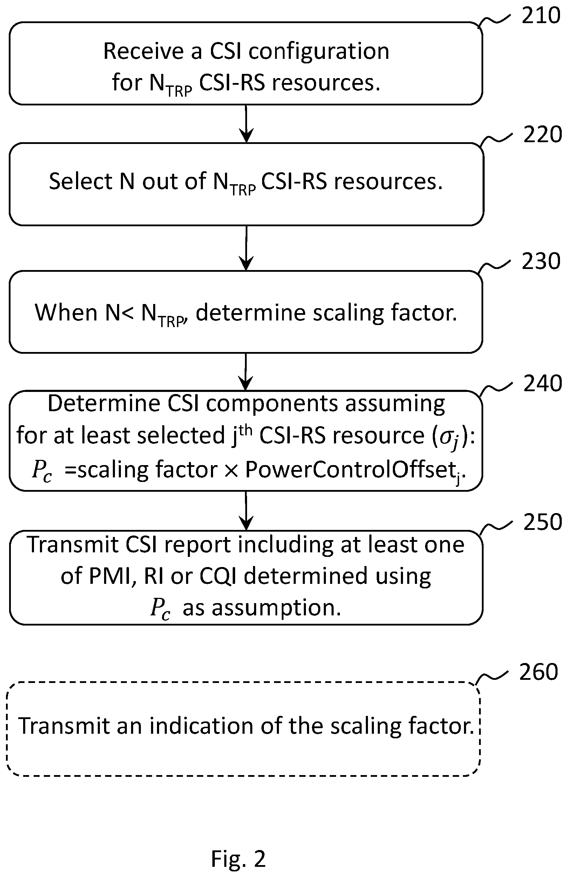

Figure 2 depicts embodiments of the present invention. At 210, UE receives a CSI configuration, wherein the CSI configuration is associated with an integer number ($N_{TRP}$) CSI-RS resources. The CSI configuration is typically received from a network node such as a base station. A UE may receive additional such CSI configurations indicating same or different numbers of CSI-RS resources, and may receive additonal CSI configurations that provide no CSI-RS resources, each of which may be received from the same network node or different network nodes. For simplicity, the embodiments are described in relation to a single received CSI configuration, but no such restriction is implied.

Based at least in part on the CSI configuration, the UE selects N out of the $N_{TRP}$ CSI-RS resources for CSI reporting, i.e. the UE selects N out of the $N_{TRP}$ CSI-RS resources into a resource set associated with a CSI report configuration.

When $N<N_{TRP}$, the UE may, at 230, determine a scaling factor. The scaling factor may be $N/N_{TRP}$. Alternatively, the scaling factor may be proportional with $N/N_{TRP}$. The UE may also determine the scaling factor when $N=N_{TRP}$, but in that case the scaling factor may be 1.

At 240, the UE may determine at least one CSI component for one or more of the N selected CSI-RS resources, wherein an individual CSI-RS resource is denoted as $\sigma_j$, j=1...N.

The determination of a CSI component may at least in part be based on an assumption that the ratio of a transmitted EPRE of a PDSCH signal and a transmitted EPRE of the corresponding CSI-RS resource $\sigma_j$, referred to as assumed Pc for CSI-RS resource $\sigma_j$, is equal to the scaling factor times a power control offset configured for the corresponding CSI-RS resource $\sigma_j$.

The determination of the at least one CSI components may at least in part be based on an assumption that the ratio of a transmitted EPRE of a PDSCH signal and a transmitted EPRE of the corresponding CSI-RS resource $\sigma_j$, referred to as assumed Pc for CSI-RS resource $\sigma_j$, is equal to the scaling factor times a power control offset configured for the corresponding CSI-RS resource $\sigma_j$, for each CSI-RS resource of the N selected resources (the resource set).

As the power control offset configured for individual CSI-RS resources may differ or be the same, the assumed Pc for individual CSI-RS resources will differ or be the same accordingly.

As part of the determination of at least one CSI component, the UE may determine the total transmitted PDSCH power corresponding to CSI-RS resource $\sigma_j$ as:

$$(\text{scaling factor} \cdot P_{c,\sigma_j}) \cdot N_{CDM} \cdot \beta_{CSI-RS,\sigma_j}^2$$

or

$$\frac{N}{N_{TRP}} P_{c,\sigma_j} N_{CDM} \cdot \beta^2_{CSI-RS,\sigma_j}$$

wherein $N_{CDM}$ is a number of code division multiplex groups, and $\beta_{CSIRS,\sigma_j}$ is the parameter $\beta_{CSIRS}$ for the $j$th CSI-RS resource as specified in 3GPP New Radio.

At 250, the UE may determine at least one of PMI, RI or CQI based at least in part on the CSI components, or based at least in part on the assumption that the Pc for CSI-RS resource $\sigma_j$ is equal to the scaling factor times a power control offset configured for the corresponding CSI-RS resource $\sigma_j$ for each CSI-RS resource of the N selected resources. The at least one of PMI, RI or CQI may be indicated in a CSI report to a network node.

At 260, the UE may indicate the scaling factor to a network node, which may be performed any time after the scaling factor is determined. The indication may be sent in the CSI report comprising the at least one of PMI, RI or CQI, or may be comprised in a different message, possibly sent earlier or later.

The indication of the scaling factor may indicate the scaling factor itself, the integer number N of selected CSI-RS, or an indication of the selected CSI-RS resources. The indication of the selected CSI-RS resources may for example comprise a bitmap indicating which of the $N_{TRP}$ CSI-RS resources indicated in the CSI report configuration were selected.

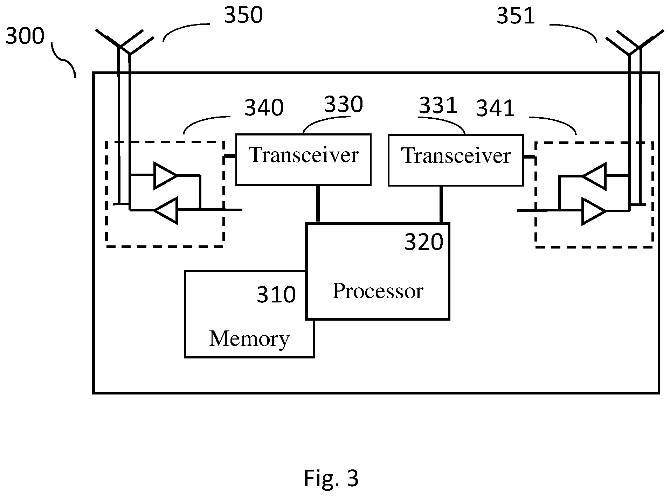

Figure 3 depicts a block diagram illustrating an example wireless apparatus (300) in accordance with embodiments of the invention. The wireless apparatus may include at least one processor (320), at least one memory (310) coupled to the at least one processor (320) and at least one suitable transceiver (330, 331) having a transmitter and a receiver coupled to the at least one processor (320), coupled to at least one antenna unit (350, 351) through at least one amplifier (340, 341). The at least one memory (310) may store computer programs, which may, when executed by the at least one processor (320), for example in combination with any of the at least one transceiver (330, 331), at least one amplifier (340, 341) and at least one antenna unit (350, 351), perform embodiments of the invention. For example, a user equipment, such as a mobile phone, car, watch or drone may be embodied in apparatus 300.

Embodiments of the invention may be implemented in software (executed by one or more processors), hardware (e.g., an application specific integrated circuit or field programmable gate array), or a combination of software and hardware. In an example embodiment, the software (e.g., application logic, an instruction set) is maintained on any one of various conventional non-transitory computer-readable media.

The software, hardware, or combination thereof, or the apparatus 300 or parts thereof, may provide means for performing embodiments of the invention.

Although various aspects are set out above, other aspects comprise other combinations of features from the described embodiments, and not solely the combinations described above.

**Claims**

1. A method for a user equipment, comprising:

    selecting (220) an integer number $N_0$ of channel state information reference signal, CSI-RS, resources out of an integer number of $N_{TRP}$ network configured CSI-RS resources (210) to obtain a resource set associated with a CSI report configuration, wherein $N_0 < N_{TRP}$;
    determining (230) a scaling factor for the resource set to be equal to $N_0$ divided by $N_{TRP}$;
    determining (240) at least one CSI component comprising one or more of precoder matrix indicator, rank indicator or channel quality indicator, based at least in part on an assumption that a ratio of a transmitted energy per resource element, EPRE, of a physical downlink shared channel, PDSCH, signal and a transmitted EPRE of the $n$th CSI-RS resource is equal to the scaling factor times a power control offset configured for the $n$th CSI-RS resource of the resource set, wherein $n \in [1, N_0]$; and
    transmitting (250) a CSI report to a network comprising the determined at least one CSI component.

2. The method of claim 1, further comprising:
    determining a total transmitted power of the PDSCH signal per $n$th CSI-RS resource to be equal to

$$\frac{N_0}{N_{TRP}} P_{c,\sigma_n} N_{CDM} \cdot \beta^2_{CSIRS,\sigma_n}$$

wherein $P_{c,\sigma_n}$ is the power control offset configured for the $n^{th}$ CSI-RS resource of the resource set; $N_{CDM}$ is a number of code division multiplex groups of the $n^{th}$ CSI-RS resource, and $\beta_{CSIRS,\sigma_n}$ is the parameter $\beta_{CSIRS}$ for the $n^{th}$ CSI-RS resource as specified in 3GPP New Radio TS 38.211, clause 7.4.1.5.3 V.18.0.0.

3. The method of claims 1 or 2, further comprising:
transmitting (260) an indication of the scaling factor to a network.

4. The method of claim 3, wherein the indication comprises the scaling factor, the selected integer number $N_0$, or an indication of the selected CSI-RS resources.

5. An apparatus, comprising:

means for selecting (220) an integer number $N_0$ of channel state information reference signal, CSI-RS, resources out of an integer number of $N_{TRP}$ network configured CSI-RS resources (210) to obtain a resource set associated with a CSI report configuration, wherein $N_0 < N_{TRP}$;
means for determining (230) a scaling factor for the resource set to be equal to $N_0$ divided by $N_{TRP}$;
means for determining (240) at least one CSI component comprising one or more of precoder matrix indicator, rank indicator or channel quality indicator, based at least in part on an assumption that a ratio of a transmitted energy per resource element, EPRE, of a physical downlink shared channel, PDSCH, signal and a transmitted EPRE of the $n^{th}$ CSI-RS resource is equal to the scaling factor times a power control offset configured for the $n^{th}$ CSI-RS resource of the resource set, wherein $n \in [1, N_0]$; and
means for transmitting (250) a CSI report to a network comprising the determined at least one CSI component.

6. The apparatus of claims 5, wherein the apparatus further comprises:
means for determining a total transmitted power of the PDSCH signal per $n^{th}$ CSI-RS resource to be equal to

$$\frac{N_0}{N_{TRP}} P_{c,\sigma_n} N_{CDM} \cdot \beta^2_{CSIRS,\sigma_n}$$

wherein $P_{c,\sigma_n}$ is the power control offset configured for the $n^{th}$ CSI-RS resource of the resource set; $N_{CDM}$ is a number of code division multiplex groups of the $n^{th}$ CSI-RS resource, and $\beta_{CSIRS,\sigma_n}$ is the parameter $\beta_{CSIRS}$ for the $n^{th}$ CSI-RS resource as specified in 3GPP New Radio TS 38.211, clause 7.4.1.5.3 V.18.0.0.

7. The apparatus of claim 5 or 6, further comprising:
means for transmitting (260) an indication of the scaling factor to a network.

8. The apparatus of claim 7, wherein the indication comprises the scaling factor, the selected integer number $N_0$, or an indication of the selected CSI-RS resources.

9. A computer program comprising instructions which, when the program is executed by a computer, cause the computer to perform:

selecting (220) an integer number $N_0$ of channel state information reference signal, CSI-RS, resources out of an integer number of $N_{TRP}$ network configured CSI-RS resources (210) to obtain a resource set associated with a CSI report configuration, wherein $N_0 < N_{TRP}$;
determining (230) a scaling factor for the resource set to be equal to $N_0$ divided by $N_{TRP}$;
determining (240) at least one CSI component comprising one or more of precoder matrix indicator, rank indicator or channel quality indicator, based at least in part on an assumption that a ratio of a transmitted energy per resource element, EPRE, of a physical downlink shared channel, PDSCH, signal and a transmitted EPRE of the $n^{th}$ CSI-RS resource is equal to the scaling factor times a power control offset configured for the $n^{th}$ CSI-RS resource of the resource set, wherein $n \in [1, N_0]$; and
transmitting (250) a CSI report to a network comprising the determined at least one CSI component.

10. The computer program of claim 9, wherein the computer further caused to perform:
determining a total transmitted power of the PDSCH signal per $n^{th}$ CSI-RS resource to be equal to

$$\frac{N_0}{N_{TRP}} P_{c,\sigma_n} N_{CDM} \cdot \beta^2_{CSIRS,\sigma_n}$$

wherein $P_{c,\sigma_n}$ is the power control offset configured for the $n^{th}$ CSI-RS resource of the resource set; $N_{CDM}$ is a number of code division multiplex groups of the $n^{th}$ CSI-RS resource, and $\beta_{CSIRS,\sigma_n}$ is the parameter $\beta_{CSIRS}$ for the $n^{th}$ CSI-RS resource as specified in 3GPP New Radio TS 38.211, clause 7.4.1.5.3 V.18.0.0.

**11.** The computer program of claim 9 or 10, further comprising:
means for transmitting (260) an indication of the scaling factor to a network.

**12.** The computer program of claim 11, wherein the indication comprises the scaling factor, the selected integer number $N_0$, or an indication of the selected CSI-RS resources.

**Patentansprüche**

**1.** Verfahren für eine Benutzereinrichtung, umfassend:

Auswählen (220) einer ganzzahligen Anzahl $N_0$ von Kanalzustandsinformations-Referenzsignal-, CSI-RS-, Ressourcen aus einer ganzzahligen Anzahl von $N_{TRP}$ netzwerk-konfigurierten CSI-RS-Ressourcen (210), um einen Ressourcensatz zu erhalten, der mit einer CSI-Berichtskonfiguration assoziiert ist, wobei $N_0 < N_{TRP}$;
Bestimmen (230) eines Skalierungsfaktors für den Ressourcensatz, der gleich $N_0$ geteilt durch $N_{TRP}$ ist;
Bestimmen (240) mindestens einer CSI-Komponente, die einen oder mehrere von Precoder-Matrix-Indikator, Rangindikator oder Kanalqualitätsindikator umfasst, zumindest teilweise basierend auf einer Annahme, dass ein Verhältnis einer übertragenen Energie pro Ressourcenelement, EPRE, eines Physical-Downlink-Shared-Channel-, PDSCH-, Signals und einer übertragenen EPRE der n-ten CSI-RS-Ressource gleich dem Skalierungsfaktor multipliziert mit einem für die n-te CSI-RS-Ressource des Ressourcensatzes konfigurierten Leistungssteuerungs-Versatzes ist, wobei $n \in [1, N_0]$; und
Übertragen (250) eines CSI-Berichts an ein Netzwerk, der die bestimmte mindestens eine CSI-Komponente umfasst.

**2.** Verfahren nach Anspruch 1, ferner umfassend:
Bestimmen einer gesamten übertragenen Leistung des PDSCH-Signals pro n-ter CSI-RS-Ressource, welche gleich

$$\frac{N_0}{N_{TRP}} P_{c,\sigma_n} N_{CDM} \cdot \beta^2_{CSIRS,\sigma_n}$$

ist, wobei $P_{c,\sigma_n}$ der für die n-te CSI-RS-Ressource des Ressourcensatzes konfigurierte Leistungssteuerungs-Versatz ist; $N_{CDM}$ eine Anzahl von Code-Division-Multiplex-Gruppen der n-ten CSI-RS-Ressource ist, und $\beta_{CSIRS,\sigma_n}$ der Parameter $\beta_{CSIRS}$ für die n-te CSI-RS-Ressource, wie in 3GPP New Radio TS 38.211, Abschnitt 7.4.1.5.3 V.18.0.0 spezifiziert, ist.

**3.** Verfahren nach Anspruch 1 oder 2, ferner umfassend:
Übertragen (260) einer Indikation des Skalierungsfaktors an ein Netzwerk.

**4.** Verfahren nach Anspruch 3, wobei die Indikation den Skalierungsfaktor, die ausgewählte ganzzahlige Anzahl $N_0$ oder eine Indikation der ausgewählten CSI-RS-Ressourcen umfasst.

**5.** Vorrichtung, umfassend:

Mittel zum Auswählen (220) einer ganzzahligen Anzahl $N_0$ von Kanalzustandsinformations-Referenzsignal-, CSI-RS-, Ressourcen aus einer ganzzahligen Anzahl von $N_{TRP}$ netzwerk-konfigurierten CSI-RS-Ressourcen (210), um einen Ressourcensatz zu erhalten, der mit einer CSI-Berichtskonfiguration assoziiert ist, wobei $N_0 < N_{TRP}$;
Mittel zum Bestimmen (230) eines Skalierungsfaktors für den Ressourcensatz, der gleich $N_0$ geteilt durch $N_{TRP}$ ist;

Mittel zum Bestimmen (240) mindestens einer CSI-Komponente, die einen oder mehrere von Precoder-Matrix-Indikator, Rangindikator oder Kanalqualitätsindikator umfasst, zumindest teilweise basierend auf einer Annahme, dass ein Verhältnis einer übertragenen Energie pro Ressourcenelement, EPRE, eines Physical-Downlink-Shared-Channel-, PDSCH-, Signals und einer übertragenen EPRE der n-ten CSI-RS-Ressource gleich dem Skalierungsfaktor multipliziert mit einem für die n-te CSI-RS-Ressource des Ressourcensatzes konfigurierten Leistungssteuerungs-Versatzes ist, wobei $n \in [1, N_0]$; und

Mittel zum Übertragen (250) eines CSI-Berichts an ein Netzwerk, der die bestimmte mindestens eine CSI-Komponente umfasst.

6. Vorrichtung nach Anspruch 5, wobei die Vorrichtung ferner umfasst:
Mittel zum Bestimmen einer gesamten übertragenen Leistung des PDSCH-Signals pro n-ter CSI-RS-Ressource, welche gleich

$$\frac{N_0}{N_{TRP}} P_{c,\sigma_n} N_{CDM} \cdot \beta^2_{CSIRS,\sigma_n}$$

ist, wobei $P_{c,\sigma_n}$ der für die n-te CSI-RS-Ressource des Ressourcensatzes konfigurierte Leistungssteuerungs-Versatz ist; $N_{CDM}$ eine Anzahl von Code-Division-Multiplex-Gruppen der n-ten CSI-RS-Ressource ist, und $\beta_{CSIRS,\sigma_n}$ der Parameter $\beta_{CSIRS}$ für die n-te CSI-RS-Ressource, wie in 3GPP New Radio TS 38.211, Abschnitt 7.4.1.5.3 V.18.0.0 spezifiziert, ist.

7. Vorrichtung nach Anspruch 5 oder 6, ferner umfassend:
Mittel zum Übertragen (260) einer Indikation des Skalierungsfaktors an ein Netzwerk.

8. Vorrichtung nach Anspruch 7, wobei die Indikation den Skalierungsfaktor, die ausgewählte ganzzahlige Anzahl $N_0$ oder eine Indikation der ausgewählten CSI-RS-Ressourcen umfasst.

9. Computerprogramm, umfassend Anweisungen, die, wenn das Programm von einem Computer ausgeführt wird, den Computer veranlassen, Folgendes auszuführen:

Auswählen (220) einer ganzzahligen Anzahl $N_0$ von Kanalzustandsinformations-Referenzsignal-, CSI-RS-, Ressourcen aus einer ganzzahligen Anzahl von $N_{TRP}$ netzwerk-konfigurierten CSI-RS-Ressourcen (210), um einen Ressourcensatz zu erhalten, der mit einer CSI-Berichtskonfiguration assoziiert ist, wobei $N_0 < N_{TRP}$;
Bestimmen (230) eines Skalierungsfaktors für den Ressourcensatz, der gleich $N_0$ geteilt durch $N_{TRP}$ ist;
Bestimmen (240) mindestens einer CSI-Komponente, die einen oder mehrere von Precoder-Matrix-Indikator, Rangindikator oder Kanalqualitätsindikator umfasst, zumindest teilweise basierend auf einer Annahme, dass ein Verhältnis einer übertragenen Energie pro Ressourcenelement, EPRE, eines Physical-Downlink-Shared-Channel-, PDSCH-, Signals und einer übertragenen EPRE der n-ten CSI-RS-Ressource gleich dem Skalierungsfaktor multipliziert mit einem für die n-te CSI-RS-Ressource des Ressourcensatzes konfigurierten Leistungssteuerungs-Versatzes ist, wobei $n \in [1, N_0]$; und
Übertragen (250) eines CSI-Berichts an ein Netzwerk, der die bestimmte mindestens eine CSI-Komponente umfasst.

10. Computerprogramm nach Anspruch 9, wobei der Computer ferner veranlasst wird, Folgendes auszuführen:
Bestimmen einer gesamten übertragenen Leistung des PDSCH-Signals pro n-ter CSI-RS-Ressource, welche gleich

$$\frac{N_0}{N_{TRP}} P_{c,\sigma_n} N_{CDM} \cdot \beta^2_{CSIRS,\sigma_n}$$

ist, wobei $P_{c,\sigma_n}$ der für die n-te CSI-RS-Ressource des Ressourcensatzes konfigurierte Leistungssteuerungs-Versatz ist; $N_{CDM}$ eine Anzahl von Code-Division-Multiplex-Gruppen der n-ten CSI-RS-Ressource ist, und $\beta_{CSIRS,\sigma_n}$ der Parameter $\beta_{CSIRS}$ für die n-te CSI-RS-Ressource, wie in 3GPP New Radio TS 38.211, Abschnitt 7.4.1.5.3 V.18.0.0 spezifiziert, ist.

11. Computerprogramm nach Anspruch 9 oder 10, ferner umfassend:
Mittel zum Übertragen (260) einer Indikation des Skalierungsfaktors an ein Netzwerk.

**12.** Computerprogramm nach Anspruch 11, wobei die Indikation den Skalierungsfaktor, die ausgewählte ganzzahlige Anzahl $N_0$ oder eine Indikation der ausgewählten CSI-RS-Ressourcen umfasst.

**Revendications**

**1.** Un procédé pour un équipement utilisateur, comprenant :

la sélection (220) d'un nombre entier $N_0$ de ressources de signal de référence d'information d'état de canal, CSI-RS, parmi un nombre entier de $N_{TRP}$ ressources CSI-RS (210) configurées par réseau afin d'obtenir un ensemble de ressources associé à une configuration de rapport CSI, dans lequel $N_0 < N_{TRP}$ ;
la détermination (230) d'un facteur d'échelle pour l'ensemble de ressources, qui est égal à $N_0$ divisé par $N_{TRP}$ ;
la détermination (240) d'au moins un composant CSI comprenant un ou plusieurs parmi indicateur de matrice de précodage, indicateur de rang ou indicateur de qualité de canal, sur la base au moins en partie de l'hypothèse selon laquelle un rapport d'une énergie par élément de ressource, EPRE, transmise d'un signal de canal partagé de liaison descendante physique, PDSCH, et d'une EPRE transmise de la n-ième ressource CSI-RS est égal au facteur d'échelle multiplié par un décalage de commande de puissance configuré pour la n-ième ressource CSI-RS de l'ensemble de ressources, dans lequel $n \in [1, N_0]$; et
la transmission (250) d'un rapport CSI à un réseau comprenant l'au moins un composant CSI déterminé.

**2.** Le procédé selon la revendication 1, comprenant en outre :
la détermination d'une puissance totale transmise du signal PDSCH par n-ième ressource CSI-RS, qui est égale à

$$\frac{N_0}{N_{TRP}} \, P_{c,\sigma_n} \, N_{CDM} \cdot \beta^2_{CSIRS,\sigma_n}$$

dans lequel $P_{c,\sigma_n}$ est le décalage de commande de puissance configuré pour la n-ième ressource CSI-RS de l'ensemble de ressources ; $N_{CDM}$ est un nombre de groupes de multiplexage de répartition de code de la n-ième ressource CSI-RS ; et $\beta_{CSIRS,\sigma_n}$ est le paramètre $\beta_{CSIRS}$ pour la n-ième ressource CSI-RS tel que spécifié dans 3GPP New Radio TS 38.211, clause 7.4.1.5.3 V.18.0.0.

**3.** Le procédé selon la revendication 1 ou 2, comprenant en outre :
la transmission (260) d'une indication du facteur d'échelle à un réseau.

**4.** Le procédé selon la revendication 3, dans lequel l'indication comprend le facteur d'échelle, le nombre entier $N_0$ sélectionné ou une indication des ressources CSI-RS sélectionnées.

**5.** Un appareil, comprenant :

des moyens pour la sélection (220) d'un nombre entier $N_0$ de ressources de signal de référence d'information d'état de canal, CSI-RS, parmi un nombre entier de $N_{TRP}$ ressources CSI-RS (210) configurées par réseau afin d'obtenir un ensemble de ressources associé à une configuration de rapport CSI, dans lequel $N_0 < N_{TRP}$;
des moyens pour la détermination (230) d'un facteur d'échelle pour l'ensemble de ressources, qui est égal à $N_0$ divisé par $N_{TRP}$ ;
des moyens pour la détermination (240) d'au moins un composant CSI comprenant un ou plusieurs parmi indicateur de matrice de précodage, indicateur de rang ou indicateur de qualité de canal, sur la base au moins en partie de l'hypothèse selon laquelle un rapport d'une énergie par élément de ressource, EPRE, transmise d'un signal de canal partagé de liaison descendante physique, PDSCH, et d'une EPRE transmise de la n-ième ressource CSI-RS est égal au facteur d'échelle multiplié par un décalage de commande de puissance configuré pour la n-ième ressource CSI-RS de l'ensemble de ressources, dans lequel $n \in [1, N_0]$ ; et
des moyens pour la transmission (250) d'un rapport CSI à un réseau comprenant l'au moins un composant CSI déterminé.

**6.** L'appareil selon la revendication 5, dans lequel l'appareil comprends en outre :
des moyens pour la détermination d'une puissance totale transmise du signal PDSCH par n-ième ressource CSI-RS, qui est égale à

$$\frac{N_0}{N_{TRP}} \, P_{c,\sigma_n} \, N_{CDM} \cdot \beta^2_{CSIRS,\sigma_n}$$

dans lequel $P_{c,\sigma_n}$ est le décalage de commande de puissance configuré pour la n-ième ressource CSI-RS de l'ensemble de ressources ; $N_{CDM}$ est un nombre de groupes de multiplexage de répartition de code de la n-ième ressource CSI-RS ; et $\beta_{CSIRS,\sigma_n}$ est le paramètre $\beta_{CSIRS}$ pour la n-ième ressource CSI-RS tel que spécifié dans 3GPP New Radio TS 38.211, clause 7.4.1.5.3 V.18.0.0.

7. L'appareil selon la revendication 5 ou 6, comprenant en outre :
des moyens pour la transmission (260) d'une indication du facteur d'échelle à un réseau.

8. L'appareil selon la revendication 7, dans lequel l'indication comprend le facteur d'échelle, le nombre entier $N_0$ sélectionné ou une indication des ressources CSI-RS sélectionnées.

9. Un programme informatique comprenant des instructions qui, lorsqu'elles sont exécutées par un ordinateur, amènent l'ordinateur à effectuer :

la sélection (220) d'un nombre entier $N_0$ de ressources de signal de référence d'information d'état de canal, CSI-RS, parmi un nombre entier de $N_{TRP}$ ressources CSI-RS (210) configurées par réseau afin d'obtenir un ensemble de ressources associé à une configuration de rapport CSI, dans lequel $N_0 < N_{TRP}$ ;
la détermination (230) d'un facteur d'échelle pour l'ensemble de ressources, qui est égal à $N_0$ divisé par $N_{TRP}$ ;
la détermination (240) d'au moins un composant CSI comprenant un ou plusieurs parmi indicateur de matrice de précodage, indicateur de rang ou indicateur de qualité de canal, sur la base au moins en partie de l'hypothèse selon laquelle un rapport d'une énergie par élément de ressource, EPRE, transmise d'un signal de canal partagé de liaison descendante physique, PDSCH, et d'une EPRE transmise de la n-ième ressource CSI-RS est égal au facteur d'échelle multiplié par un décalage de commande de puissance configuré pour la n-ième ressource CSI-RS de l'ensemble de ressources, dans lequel n $\in$ [1, $N_0$] ; et
la transmission (250) d'un rapport CSI à un réseau comprenant l'au moins un composant CSI déterminé.

10. Le programme informatique selon la revendication 9, dans lequel l'ordinateur est en outre amené à effectuer :
la détermination d'une puissance totale transmise du signal PDSCH par n-ième ressource CSI-RS, qui est égale à

$$\frac{N_0}{N_{TRP}} \, P_{c,\sigma_n} \, N_{CDM} \cdot \beta^2_{CSIRS,\sigma_n}$$

dans lequel $P_{c,\sigma_n}$ est le décalage de commande de puissance configuré pour la n-ième ressource CSI-RS de l'ensemble de ressources ; $N_{CDM}$ est un nombre de groupes de multiplexage de répartition de code de la n-ième ressource CSI-RS ; et $\beta_{CSIRS,\sigma_n}$ est le paramètre $\beta_{CSIRS}$ pour la n-ième ressource CSI-RS tel que spécifié dans 3GPP New Radio TS 38.211, clause 7.4.1.5.3 V.18.0.0.

11. Le programme informatique selon la revendication 9 ou 10, comprenant en outre :
des moyens pour la transmission (260) d'une indication du facteur d'échelle à un réseau.

12. Le programme informatique selon la revendication 11, dans lequel l'indication comprend le facteur d'échelle, le nombre entier $N_0$ sélectionné ou une indication des ressources CSI-RS sélectionnées.

central scheduler

backhaul

TRP 1

TRP 0

backhaul

TRP 2

backhaul

TRP 3

Fig. 1

Fig. 2

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- CSI enhancement for coherent JP and mobility. *3GPP TSG-RAN WG1 Meeting #113 documents R1-2304638*

- Views on CSI Enhancement for CJT. *R1-2304939*